# EUROPEAN PATENT SPECIFICATION

(11) **EP 2 059 131 B1**
(45) Date of publication and mention of the grant of the patent: **02.06.2010**
(21) Application number: 07808550.3
(22) Date of filing: 24.08.2007
(51) Int. Cl.: A23D 9/00, A23G 3/40, A23G 3/52, A23G 9/32

(54) **AERATED FOOD PRODUCT AND METHOD OF MANUFACTURING SUCH PRODUCT**
GESCHÄUMTES NAHRUNGSMITTELPRODUKT UND VERFAHREN ZUR HERSTELLUNG SOLCH EINES PRODUKTS
PRODUIT ALIMENTAIRE AÉRÉ ET PROCÉDÉ DE PRÉPARATION DUDIT PRODUIT

(30) Priority: 28.08.2006 EP 06119627
(43) Date of publication of application: 20.05.2009
(73) Proprietor: Sime Darby Malaysia Berhad, Kuala Lumpur, 50350 (MY)
(72) Inventor: NOOR, Ahmadilfitri, Negeri Sembilan 71800 Nilai (MY); DE RUITER, Gerhard, Adriaan, 5473 JE Heeswijk-Dinther (NL)
(74) Representative: Swinkels, Bart Willem
(86) International application number: PCT/NL2007/050417
(87) International publication number: WO 2008/026920

(56) References cited:
- EP-A- 0 740 905
- WO-A-2005/016023
- WO-A-2006/066979
- GB-A- 1 444 820
- JP-A- 55 153 561
- JP-A- 57 036 943
- JP-A- 57 036 944

## Description

### TECHNICAL FIELD OF THE INVENTION

The present invention relates to aerated food products such as ice cream. More particularly, the present invention relates to aerated food products comprising fat and water. The invention also concerns a method of manufacturing such aerated food products.

### BACKGROUND OF THE INVENTION

The main components of ice cream include water, sugars and fat. Butter oil is most commonly used as the fat ingredient in ice cream. Vegetable oils are also applied in ice creams, coconut oil being most commonly used. Coconut oil offers the advantage that, like butter oil, it has a relatively high solid fat content at low temperatures (e.g. between 5 and 10 °C) and a relatively low solid fat content at elevated temperatures, e.g. between 30 and 35 °C. Furthermore, coconut oil contains relatively small amounts of unsaturated fatty acids, which means that it does not easily oxidise. The relatively small amount of unsaturated fatty acids found in coconut oil also constitutes a serious drawback as it is generally accepted that oils that are low in unsaturated fatty acids do not fit in a healthy diet. The same holds true for butter oil, be it to a slightly lesser extent.

Hence, it would be desirable to replace coconut oil and butter oil in ice cream by oils that contain substantially larger amounts of unsaturated fatty acids. However, the use of such oils in aerated food products, such as ice cream, is associated with serious problems as these oils are easily oxidised. Oxidation of unsaturated vegetable oils leads to objectionable off-flavours that are often described as 'cardboard-like'. Aerated food products containing unsaturated oils are particularly vulnerable to fat oxidation as they comprise a very large oil-air interface.

It is known that the oxidation stability of vegetable oils may be improved by hydrogenating these oils. Hydrogenation removes double bonds from unsaturated fatty acids, making them much less vulnerable to oxidation, especially if the oil is fully hydrogenated, in which case it contains only saturated fatty acids. However, hydrogenation also affects the melting characteristics of the oil. The melting behaviour of vegetable oils that have been hydrogenated to a considerable degree (e.g. fats with a melting point of more than 50 °C) is often found to be unsatisfactory. In addition, consumers increasingly object to the use of hydrogenated oils food products, especially if these hydrogenated oils contain appreciable amounts of trans fatty acids.

EP-A 0 740 905 describes an oil-and-fat feedstock for producing frozen confections which comprises 95 to 40% by weight of an oil-and-fat ingredient containing at least 40% by weight of SUS triglycerides based on the weight of said oil-and-fat ingredient and 5 to 60% by weight of a lauric oil-and-fat ingredient. The saturated fatty acid levels of the feedstocks described in EP-A 0 740 905 are well in excess of 50% by weight of total fatty acids.

WO 2005/016023 describes a frozen aerated product comprising 2-20 wt.% vegetable fat component of which up to 20% by weight of the fatty acids are polyunsaturated fatty acids, less than 15% by weight of the fatty acids are linoleic acid and up to 50% by weight of the fatty acids are saturated fatty acids. Palm oil is nowhere mentioned in WO 2005/016023.

WO 2006/066979 describes an aerated frozen confection containing 2-20 wt.% of a fat component, said fat component comprising triglycerides of fatty acids wherein:
- no more than 55 wt.% of the fatty acids in the triglycerides are saturated;
- less than 8 wt.% of the triglycerides are long chain SSS triglycerides;
characterized in that the ratio of the percentage of fat that is solid at 5°C to the weight percentage of the fatty acids in the triglycerides that are saturated is greater than 1. The organoleptic quality, especially the taste of ice cream products made with the fat blends described in WO 2006/066979 is unsatisfactory. The poor taste of these products is believed to be associated with off-flavour formation.

Consequently, there is a need for fats that contain substantial amounts of unsaturated fatty acids and that can suitably be applied in aerated food products without giving rise to serious off-flavour problems.

### SUMMARY OF THE INVENTION

The inventors have found that the aforementioned need is fulfilled by a fat component that is characterised by the following solid fat profile:
- 20% < N₁₀ < 40%;
- 0% < N₂₀ < 20%;
- 0%<N₃₀<10%;
- N₁₀ - N₂₀ ≥20%;
   as well as the following fatty acid composition:
- 50-70% unsaturated fatty acids;
- 1.5-15% C₁₂-C₁₄ fatty acids
- at least 20% palmitic acid;
- at least 30% oleic acid;
   all percentages being calculated by weight of the total amount of fatty acids.

Fats that exhibit the above mentioned combination of features can suitably be used in the manufacture of aerated food products to provide substantial quantities of unsaturated fatty acids. The aerated food products so obtained display a favourable melting behaviour that is similar to that of butter oil and exhibit excellent taste characteristics that are similar to aerated food products based on coconut oil.

The fat component according to the present invention can suitably be prepared by combining a lauric fat, an unsaturated oil component and a palm mid fraction.

### DETAILED DESCRIPTION OF THE INVENTION

Accordingly, one aspect of the present invention relates to an aerated food product comprising at least 0.5 wt.% of fat and at least 30 wt.% of water, said fat being characterised by the following solid fat profile:
- 20%<N₁₀<40%;
- 0%<N₂₀<20%;
- 0%<N₃₀<10%;
- N₁₀-N₂₀≥20%;
   said fat further being characterised by the following fatty acid composition:
- 50-70% unsaturated fatty acids;
- 1.5-15% C₁₂-C₁₄ fatty acids
- at least 20% palmitic acid;
- at least 30% oleic acid;
   all percentages being calculated by weight of the total amount of fatty acids.

The terns "oil" and "fat" are deemed to be synonyms and encompass lipids such as triglycerides, diglycerides, monoglycerides, phosphoglycerides etc. Most preferably, the oil (or fat) employed in accordance with the present invention is a triglyceride fat.

The term "fatty acid" as used herein encompasses fatty acid residues contained, for instance, in triglycerides.

The N-value Nₜ equals the solid fat content of a fat at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of fatty acid residues and free fatty acids contained in the fat of the aerated food product. Thus, concentrations expressed in % by weight of the total amount of fatty acids refer to the total combined amount of fatty acid residues and free fatty acids. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

Examples of aerated food products according to the present invention include ice cream, whipped cream, fillings, toppings and aerated desserts. Most preferably, the present aerated food product is a frozen food product, preferably ice cream. Typically, the present food product has a density of less than 0.8 g/ml, preferably of less than 0.7 g/ml.

According to a preferred embodiment, palmitic acid and oleic acid together represent more than 55% by weight of the total amount of fatty acids contained in the fat of the present aerated food product. More preferably palmitic acid and oleic acid together represent at least 60%, even more preferably at least 65% and most preferably at least 68% by weight of the total amount of fatty acids.

According to a particularly preferred embodiment, the fat contained in the present aerated food product contains at least 22% of palmitic acid by weight of total fatty acids. Even more preferably, said fat contains at least 24%, most preferably at least 26% palmitic acid by weight of total fatty acids. The presence of appreciable amounts of palmitic acid in the fat is associated with favourable melting behaviour as palmitic acid contributes to the solid fat content at low temperatures and much less so to the solid fat content at elevated temperatures. Typically, the fat of the present aerated food product contains not more than 40%, preferably not more than 36% and most preferably not more than 34% palmitic acid by weight of total fatty acids.

Besides palmitic acid (C₁₆ saturated fatty acid), the fat employed in the aerated food product contains appreciable amounts of other saturated fatty acids, notably myristic acid (C₁₄ saturated fatty acid) and lauric acid (C₁₂ saturated fatty acid), and optionally other saturated fatty acids such as stearic acid (C₁₈ saturated fatty acid). Typically, palmitic acid represents at least 60% by weight of the total amount of saturated fatty acids. Preferably, palmitic acid represents at least 60 wt.% of the saturated fatty acids. Most preferably, palmitic acid represents at least 70 wt.% of the saturated fatty acids.

The inventors have observed that the sensory characteristics of the present food product are particularly good if the fat comprised in the product contains at least 2%, more preferably at least 2.5% and most preferably at least 3% of C₁₂-C₁₄ fatty acids, especially of saturated C₁₂-C₁₄ fatty acids by weight of total fatty acids.

Unlike coconut oil and palmkernel oil, the fat employed in accordance with the invention contains less than 15% C₁₂-C₁₄ fatty acids by weight of total fatty acids. Preferably, the fat contains less than 12%, more preferably less than 10% even more preferably less than 8% and most preferably less than 7% C₁₂-C₁₄ fatty acids by weight of total fatty acids. Furthermore, C₁₂-C₁₄ fatty acids typically represent less than 25 wt.%, preferably less than 20 wt.% of the saturated fatty acids. Most preferably, C₁₂-C₁₄ fatty acids represent less than 15 wt.% of the saturated fatty acids contained in the fat of the present aerated food product.

The fat contained in the present food product should contain an appreciable amount of saturated fatty acids as this is required to provide substantial amounts of solid fat at low temperatures. The in-mouth melting of this solid fat contributes significantly to the eating quality of the food product. At the same time, as explained above, the present invention aims to provide a an aerated product comprising a fat that contains appreciable amounts of unsaturated fatty acids.

In an advantageous embodiment of the invention, saturated fatty acids represent less than 48 wt.%, preferably less than 46wt.% and most preferably less than 44 wt.% of the total amount of fatty acids contained in the fat of the present product. According to another preferred embodiment, saturated fatty acids represent at least 32 wt.%, most preferably at least 35 wt.% of the total amount of fatty acids contained in the fat of the present product.

Monounsaturated fatty acids, especially oleic acid, preferably represent at least 32 wt.%, more preferably at least 35 wt.% and most preferably at least 40 wt.% of the total amount of fatty acids. Typically, the amount of oleic acid contained in the fat of the present product does not exceed 50 wt.%. Expressed differently, oleic acid preferably represents at least 50% by weight, more preferably at least 60% by weight of the total amount of unsaturated fatty acids.

Besides monounsaturated fatty acids, the fat of the present product may suitably contain an appreciable amount of polyunsaturated fatty acids. Typically, polyunsaturated fatty acids represent 8-32 wt.%, more preferably 10-25 wt.% of the total amount of fatty acids contained in the fat.

According to another preferred embodiment, the fat contains no or more than limited amounts of C₂₀-C₂₄ ω-3 polyunsaturated fatty acids as these fatty acids have an adverse effect on the organoleptic quality of the aerated food product. Preferably, C₂₀-C₂₄ ω-3 polyunsaturated fatty acids, if present, are contained therein in a concentration of less than 1.0%, more preferably of less than 0.5% by weight of the total amount of fatty acids. Most preferably, the fat contains C₂₀-C₂₄ ω-3 polyunsaturated fatty acids in a concentration of not more than 0.2% by weight of the total amount of fatty acids.

The fat employed in the present aerated food product preferably does not contain any animal fat. Most preferably, the fat is exclusively composed of vegetable fat. According to a particularly preferred embodiment, the fat of the present product is obtained from two or more different vegetables sources, including a palm oil derived component and a lauric fat derived component. Particularly preferred is a fat that is composed of at least 40 wt.% or even at least 45 wt.% of palm oil and/or palm oil fraction. Even more preferably, the present fat contains from 10-50 wt% of a palm olein with an iodine value of at least 50 and 10-50 wt.% of a palm mid fraction with an iodine value in the range of 35-45.

In addition, the present advantageously contains between 1 and 25 wt.%, especially between 2 and 15 wt.% of a lauric fat component selected from coconut oil, palm kernel oil, a fraction of coconut oil, a fraction of palm kernel oil and mixtures thereof.

Furthermore, the fat of the present product additionally contains from 20-50 wt.%, most preferably from 25-45wt.% of an unsaturated oil component, especially an unsaturated oil component selected from the group consisting of sunflower oil, soybean oil, rapeseed oil, corn oil, flaxseed oil, olive oil, safflower oil and combinations thereof.

It is highly desirable that the fat contained in the present food product melts almost completely at in-mouth temperatures. Consequently, the solid fat content N₃₅ preferably does not exceed 5%, more preferably it does not exceed 3%. Most preferably, the solid fat content N₃₅ does not exceed 1%.

The fat employed in the present food product preferably contains a limited amount of solid fat at a temperature of 30°C. Typically, the fat has an N₃₀ that does not exceed 8%. Even more preferably, the solid fat content N₃₀ does not exceed 6%, most preferably it does not exceed 3%.

The present food product preferably contains a so called steep melting fat, especially a fat that melts very quickly between 10 and 20°C. Accordingly, in a preferred embodiment, the fat contained in the present product is characterised in that N₁₀ - N₂₀ ≥ 22%, preferably in that N₁₀ - N₂₀ ≥ 24%. Food products exhibiting these solid fat contents will impart a highly desirable in-mouth melting behaviour, especially if the product has a temperature of 10 °C or less upon ingestion.

Typically, the solid fat content N₂₀ is in the range of 1-18%. More preferably, the solid fat content N₂₀ is within the range of 2-15%, most preferably within the range of 3-12 %.

The food product of the present invention preferably comprises a fat that contains a substantial amount of solid fat at a temperature of about 10 °C. Typically the solid fat content N₁₀ is within the range of 25-38%. More preferably, the solid fat content N₁₀ is within the range of 26-36%, most preferably within the range of 27-35%.

According to another preferred embodiment, the solid fat content N₅ does not exceed 45%, even more preferably it does not exceed 40%.

According to a particularly preferred embodiment, the fat contained in the present aerated product contains a substantial amount of palm olein, especially palm olein with an iodine value of at least 50. The present of a substantial amount of palm olein in the fat of the present product is reflected by a relatively high weight ratio of dioleyl, monopalmitoyl triglycerides (POO) and tripalmitoyl triglycerides (PPP). Advantageously the weight ratio POO to PPP is at least 7. More preferably, said weight ratio is at least 8, most preferably at least 8.5. Typically, the weight ration POO to PPP does not exceed 20. Preferably, it does not exceed 15.

Finally, the fat of the aerated food product is preferably characterised by a ratio (N₁₀ -N₃₀) / N₂₀ between 3.0 and 7.0. Even more preferably, said ratio is in the range of 3.5 to 5.0.

Unlike the aerated food products described in WO 2006/066979, the aerated food product of the present invention is preferably characterised in that N₅ divided by the percentage of saturated fatty acids by weight of total fatty acids is less than 1. According to another preferred embodiment that sets the present food products apart from those disclosed in WO 2006/066979, the fat contains les than 40 wt.% of SUS triglycerides.

The present food product may contain minor quantities of hydrogenated fats, especially fully hydrogenated fats. According to a preferred embodiment, however, the product does not contain hydrogenated fat. Likewise, the present product preferably contains no appreciable amounts of trans-unsaturated fatty acids. Typically, the product contains less than 3% trans-unsaturated fatty acids by weight of the total amount of fatty acids. Preferably, the product contains less than 1%, more preferably less than 0.8% and most preferably less than 0.7% trans-unsaturated fatty acids by weight of the total amount of fatty acids.

The fat contained in the present food product may suitably contain interesterified fats. According to a particularly preferred embodiment, the fat essentially consists of an interesterified fat blend. The use of an interesterified fat blend offers the advantage that despite relatively high levels of unsaturated fatty acids high solid fat contents can be achieved. Thus, by interesterifying the fat blends of the present invention it is feasible to provide fat blends that exhibit butter oil-like melting characteristics with even higher levels of unsaturated fatty acids. Completely interesterified fat blends are characterised in that the carbon number distribution of the triglycerides contained in the fat is essentially Gaussian.

In accordance with the present invention a particularly preferred aerated food product comprises:
- 2-20 wt.% fat, preferably 4-12 wt.% fat;
- 4-25 wt.% of carbohydrates and/or sugar replacers;
- 2-10 wt.% of protein; and
- 55-75 wt.% water.
   The carbohydrates employed in the present product are advantageously selected from the group of monosaccharides, disaccharides and combinations thereof. An example of a suitable sugar replacers include sucralose. Most preferably, the present food product contains 4-25 wt.% of carbohydrates.

Another aspect of the present invention relates to a method of preparing a fat blend that is characterised by the same solid fat profile and fatty acid composition as the fat contained in the present aerated food product, said method comprising admixing:
- 0-50 wt% of a palm olein with an iodine value of at least 50;
- 1-25 wt.%, especially 2-15 wt.% of a lauric fat component comprising at least 50% of C₁₀-C₁₄ fatty acids by weight of the total amount of fatty acids;
- 20-50 wt.%, preferably 25-45 wt.% of an unsaturated oil component comprising at least 70% of unsaturated fatty acids by weight of the total amount of fatty acids; and
- 10-65 wt.%, preferably 20-55 wt.% of a palm mid fraction with an iodine value in the range of 35-45. All of these weight percentages are calculated on the total weight of the fat blend that is obtained by the method.

According to a particularly preferred embodiment, the palm olein and the palm mid fraction together represent at least 48 wt.%, more preferably at least 50 wt.% and most preferably at least 55 wt.% of the fat blend that is obtained by the present method. It was found that a fat blend with exceptionally good taste characteristics is obtained if the present method employs at least 5 wt.%, more preferably at least 10 wt.% and most preferably at least 15 wt.% of the palm olein with an iodine value of at least 50. Preferably, said palm olein is employed in an amount that does not exceed 40% by weight of the resulting fat blend.

The palm olein employed in the present method preferably contains dioleyl, monopalmitoyl triglycerides (POO) and tripalmitoyl triglycerides (PPP) in a weight ratio of 10-50, preferably of 12-40. The palm mid fraction is preferably characterised by a weight ratio POO to PPP of 3-8, more preferably of 3.7-7, most preferably of 4.0-6.0.

In accordance with another preferred embodiment, the fat blend obtained by the present method is characterised in that the palm olein, the lauric fat component, the unsaturated oil component and the palm mid fraction together represent at least 90 wt.%, preferably at least 95 wt.% of the fat blend.

The lauric fat component employed in the present method is preferably derived from coconut oil and/or palm kernel oil. In accordance with the present invention also fractions of the latter lauric fats and/or hydrogenated or interesterified versions of these lauric fats (or their fractions) may be employed.

The unsaturated oil component employed in the present method is advantageously selected from the group consisting of sunflower oil, soybean oil, rapeseed oil, corn oil, flaxseed oil, olive oil, safflower oil, fractions of these oils and combinations thereof.

The fat blend obtained by the present method advantageously exhibits the features that have been described herein before in relation to the fat contained in the aerated food product of the present invention.
The present invention also provides a fat blend that can be obtained by the aforementioned method.

The invention is further illustrated by means of the following examples.

### EXAMPLES

### Example 1

Ice cream samples were prepared on the basis of the following recipe:

| Ingredient | % by weight |
|---|---|
| Fat | 8 |
| Skim milk powder | 11 |
| Sucrose | 12 |
| Corn syrup solids¹ | 6 |
| Emulsifier, stabiliser mix² | 0.55 |
| Water | 62.45 |

| | |
|---|---|
| ¹ Cremodan ® SE 30 (ex Danisco) ² GL 0193(ex Cerestar) | |

Six different fats were used to produce ice cream samples 1A, 1B, 1C, 1D, 1E and 1F. The composition of these fats is depicted in the following table:

| Sample | Composition of fat |
|---|---|
| 1A | Palm oil |
| 1B | Coconut oil |
| 1C | 50:40:10 blend of palm mid fraction (IV=43), rape seed oil and coconut oil |
| 1D | 40:35:20:5 blend of palm mid fraction (IV=43), rape seed oil, palm olein (IV=56) and coconut oil |
| 1E | 60:35:5 blend of palm mid fraction (IV=43), rape seed oil and coconut oil |
| 1F | 30:35:30:5 blend of palm mid fraction (IV=43), rape seed oil, palm olein (IV=56) and coconut oil |

The fatty acid composition of the fats was analysed, yielding the following result (concentrations expressed in % by weight of total fatty acids):

| | 1A | 1B | 1C | 1D | 1E | 1F |
|---|---|---|---|---|---|---|
| C6:0 | | 0.3 | | | | |
| C8:0 | | 6.0 | 0.6 | 0.3 | 0.3 | 0.3 |
| C10:0 | | 5.6 | 0.6 | 0.3 | 0.3 | 0.2 |
| C12:0 | 0.2 | 47.8 | 4.9 | 2.4 | 2.4 | 2.2 |
| C14:0 | 1.1 | 19.0 | 2.4 | 1.6 | 1.5 | 1.5 |
| C16:0 | 43.8 | 9.7 | 26.1 | 30.8 | 32.7 | 29.3 |
| C16:1 | 0.2 | | 0.2 | 0.2 | 0.2 | 0.2 |
| C18:0 | 4.5 | 2.9 | 3.4 | 3.5 | 3.6 | 3.5 |
| C18:1 | 38.4 | 6.9 | 44.3 | 43.7 | 42.6 | 45.2 |
| C18:2 | 10.9 | 1.7 | 12.1 | 12.4 | 11.6 | 12.7 |
| C18:3 | 0.2 | | 4.1 | 3.4 | 3.3 | 3.7 |
| C20:0 | 0.3 | 0.1 | 0.4 | 0.3 | 0.4 | 0.2 |
| C20:1 | 0.2 | | 0.1 | 0.2 | 0.2 | 0.1 |

Also the solid fat content of the fats was determined at different temperatures using the analytical method described herein before. The following results were obtained:

| | 1A | 1B | 1C | 1D | 1E | 1F |
|---|---|---|---|---|---|---|
| N₁₀ | 54.1 | 79.0 | 30.2 | 30.7 | 37.4 | 27.7 |
| N₂₀ | 25.4 | 40.7 | 5.4 | 5.8 | 9.5 | 4.5 |
| N₃₀ | 8.6 | 0.0 | 0.0 | 0.0 | 0.0 | 0.0 |
| N₃₅ | 4.9 | 0.0 | 0.0 | 0.0 | 0.0 | 0.0 |
| N₄₀ | 2.7 | 0.0 | 0.0 | 0.0 | 0.0 | 0.0 |

The ice cream samples were produced at an overrun of 100% on a pilot plant Votator®. A pre-emulsion was prepared by blending the ingredients and heating at 50 °C for 15 minutes. Next, the pre-emulsion was pasteurised by heating to 80 °C for 20 seconds. Subsequently, the pasteurised pre-emulsion was homogenised, cooled to 4 °C and kept overnight at this temperature. The ice cream samples were prepared by processing the homogenised emulsion in the Votator®.

The ice cream samples so obtained were first stored at -40 °C for 24 hours and subsequently at -18 °C for 3 weeks before being evaluated by a QDA sensory panel. The panel members were asked to rank the samples in order of preference. For each sample the average ranking was determined. Sample 1B had the highest ranking and sample 1A the lowest. Of the remaining three samples, sample 1D had the highest score and sample I E the lowest. In summary, the order of preference was: 1B, 1D, 1F, 1C, IE, 1A.

## Claims

1. Aerated food product comprising at least 0.5 wt.% of fat and at least 30 wt.% of water, said fat being **characterised by** the following solid fat profile:
• 20% < N₁₀ < 40%;
• 0% < N₂₀ < 20%;
• 0% < N₃₀ < 10%;
• N₁₀ - N₂₀ ≥ 20%;
wherein Nₜ equals the solid fat content of a fat at a temperature of t °C as measured by means of ISO 8292 - Animal and vegetable fats and oils - Determination of solid fat content - Pulsed nuclear magnetic resonance method;
said fat further being **characterised by** the following fatty acid composition:
• 50-70% unsaturated fatty acids;
• 1.5-15% C₁₂-C₁₄ fatty acids
• at least 20% palmitic acid;
• at least 30% oleic acid;
all percentages being calculated by weight of the total amount of fatty acids.

2. Food product according to claim 1, wherein palmitic acid and oleic acid together represent at least 60%, preferably at least 65% by weight of the total amount of fatty acids.

3. Food product according to claim 1 or 2, wherein the fat contains 22-36% of palmitic acid by weight of total fatty acids.

4. Food product according to claim 1, wherein the fat contains at least 35-50% of oleic acid by weight of total fatty acids.

5. Food product according to any one of the preceding claims wherein N₅ divided by the percentage of saturated fatty acids by weight of total fatty acids is less than 1.

6. Food product according to any one of the preceding claims, wherein the fat contains 2-12%, preferably 2.5-10% C₁₂-C₁₄ fatty acids by weight of total fatty acids.

7. Food product according to any one of the preceding claims, wherein palmitic acid represents at least 70% by weight of the total amount of saturated fatty acids.

8. Food product according to any one of the preceding claims, wherein polyunsaturated fatty acids represent 8-32 wt.%, preferably 10-25 wt.% of the total amount of fatty acids.

9. Food product according to any one of the preceding claims, wherein the fat contains not more than 46% of saturated fatty acids by weight of the total amount of fatty acids.

10. Food product according to any one of the preceding claims, wherein the fat contains dioleyl, monopalmitoyl triglycerides and tripalmitoyl triglycerides in a weight ratio of at least 7.

11. Food product according to any one of the preceding claims, wherein the ratio (N₁₀ - N₃₀) / N₂₀ is between 3.0 and 7.0.

12. Food product according to any one of the preceding claims, wherein the food product is a frozen food product, preferably ice cream.

13. Method of preparing a fat blend with a solid fat profile and a fatty acid composition as defined in claim 1, said method comprising admixing:
- 0-50 wt% of a palm olein with an iodine value of at least 50;
- 1-25 wt.% of a lauric fat component comprising at least 50% of C₁₀-C₁₄ fatty acids by weight of the total amount of fatty acids;
- 20-50 wt.% of an unsaturated oil component comprising at least 70% of a unsaturated fatty acids by weight ot the total amount of fatty acids.; and
- 10-65 wt.% of a palm mid fraction with an iodine value in the range of 35-45.

14. Method according to claim 13, wherein the method comprises admixing 10-50 wt.% of the palm olein with an iodine value of at least 50.

## Patentansprüche

1. Luftversetztes Nahrungsmittelprodukt, umfassend mindestens 0,5 Gew.-% Fett und mindestens 30 Gew.-% Wasser, wobei besagtes Fett durch das folgende Feststofffettprofil **gekennzeichnet** ist:
• 20%<N₁₀<40%;
• 0%<N₂₀<20%;
• 0%<N₃₀<10%;
• N₁₀-N₂₀≥20%;
wobei Nₜ dem Feststofffettanteil eines Fettes bei einer Temperatur von t °C entspricht, gemessen mittels ISO 8292 - Tierische und pflanzliche Fette und Öle - Bestimmung des Feststofffettanteils - Gepulste Kernspinresonanzmethode;
wobei besagtes Fett zusätzlich durch die folgende Fettsäurezusammensetzung **gekennzeichnet** ist:
• 50-70% ungesättigte Fettsäuren;
• 1,5-15% C₁₂-C₁₄ Fettsäuren;
• mindestens 20% Palmitinsäure;
• mindestens 30% Oleinsäure;
wobei alle Prozentwerte bezogen auf das Gewicht der Gesamtmenge an Fettsäuren berechnet werden.

2. Nahrungsmittelprodukt gemäß Anspruch 1, wobei Palmitinsäure und Oleinsäure zusammen mindestens 60%, bevorzugt mindestens 65% bezogen auf das Gewicht der Gesamtmenge an Fettsäuren darstellen.

3. Nahrungsmittelprodukt gemäß Anspruch 1 oder 2, wobei das Fett 22-36% Palmitinsäure bezogen auf das Gewicht an Gesamtfettsäuren enthält.

4. Nahrungsmittelprodukt gemäß Anspruch 1, wobei das Fett mindestens 35-50% Oleinsäure bezogen auf das Gewicht an Gesamtfettsäuren enthält.

5. Nahrungsmittelprodukt gemäß einem der vorhergehenden Ansprüche, wobei N₅ geteilt durch den Prozentwert an gesättigten Fettsäuren bezogen auf das Gewicht an Gesamtfettsäuren weniger als 1 ist.

6. Nahrungsmittelprodukt gemäß einem der vorhergehenden Ansprüche, wobei das Fett 2-12%, bevorzugt 2,5-10% C₁₂-C₁₄ Fettsäuren bezogen auf das Gewicht an Gesamtfettsäuren enthält.

7. Nahrungsmittelprodukt gemäß einem der vorhergehenden Ansprüche, wobei Palmitinsäure mindestens 70% bezogen auf das Gewicht der Gesamtmenge an gesättigten Fettsäuren darstellt.

8. Nahrungsmittelprodukt gemäß einem der vorhergehenden Ansprüche, wobei mehrfach ungesättigte Fettsäuren 8-32 Gew.-%, bevorzugt 10-25 Gew.-% der Gesamtmenge an Fettsäuren darstellen.

9. Nahrungsmittelprodukt gemäß einem der vorhergehenden Ansprüche, wobei das Fett nicht mehr als 46% gesättigte Fettsäuren bezogen auf das Gewicht der Gesamtmenge an Fettsäuren enthält.

10. Nahrungsmittelprodukt gemäß einem der vorhergehenden Ansprüche, wobei das Fett Diolein-, Monopalmitintriglyceride und Tripalmitintriglyceride in einem Gewichtsverhältnis von mindestens 7 enthält.

11. Nahrungsmittelprodukt gemäß einem der vorhergehenden Ansprüche, wobei das Verhältnis (N₁₀-N₃₀)/N₂₀ zwischen 3,0 und 7,0 ist.

12. Nahrungsmittelprodukt gemäß einem der vorhergehenden Ansprüche, wobei das Nahrungsmittelprodukt ein gefrorenes Nahrungsmittelprodukt, bevorzugt Speiseeis ist.

13. Verfahren zum Herstellen eines Fettgemisches mit einem Feststofffettprofil und einer Fettsäurezusammensetzung wie in Anspruch 1 definiert, wobei besagtes Verfahren das Mischen von
- 0-5 Gew.-% eines Palm Oleins mit einer Iodzahl von mindestens 50;
- 1-25 Gew.-% einer Laurinfettkomponente, umfassend mindestens 50% C₁₀-C₁₄ Fettsäuren bezogen auf das Gewicht der Gesamtmenge an Fettsäuren;
- 20-50 Gew.-% einer ungesättigten Ölkomponente, umfassend mindestens 70% einer ungesättigten Fettsäure bezogen auf das Gewicht der Gesamtmenge an Fettsäuren; und
- 10-65 Gew.-% einer Palm Mittelfraktion mit einer Iodzahl im Bereich von 35-45,
umfasst.

14. Verfahren gemäß Anspruch 13, wobei das Verfahren das Mischen von 10-50 Gew.-% eines Palm Oleins mit einer Iodzahl von mindestens 50 umfasst.

## Revendications

1. Produit alimentaire aéré comprenant au moins 0,5 % en poids de matière grasse et au moins 30 % en poids d'eau, ladite matière grasse étant **caractérisée par** le profil de matière grasse solide suivant :
• 20 % < N₁₀ < 40 % ;
• 0 % < N₂₀ < 20 % ;
• 0 % < N₃₀ < 10 % ;
• N₁₀ - N₂₀ ≥ 20 % ;
où Nₜ est égal à la teneur en matière grasse solide d'une matière grasse à une température de t°C telle que mesurée selon ISO 8292 - Huiles et graisses animales et végétales - Détermination de la teneur en matière grasse solide - Procédé par résonance magnétique nucléaire pulsée ;
ladite matière grasse étant en outre **caractérisée par** la composition en acides gras suivants :
• 50 à 70 % d'acides gras insaturés
• 1,5 à 15 % d'acides gras C₁₂ à C₁₄ ;
• au moins 20 % d'acide palmitique ;
• au moins 30 % d'acide oléique ;
tous les pourcentages étant calculés en poids de la teneur totale en acides gras.

2. Produit alimentaire selon la revendication 1, dans lequel l'acide palmitique et l'acide oléique représentent conjointement au moins 60 %, de préférence au moins 65 % en poids de la teneur totale en acides gras.

3. Produit alimentaire selon la revendication 1 ou 2, dans lequel la matière grasse renferme de 22 à 36 % d'acide palmitique en poids de la teneur totale en acides gras.

4. Produit alimentaire selon la revendication 1, dans lequel la matière grasse renferme au moins 35 à 50% d'acide oléique en poids de la teneur totale en acides gras.

5. Produit alimentaire selon l'une quelconque des revendications précédentes, dans lequel N₅ divisé par le pourcentage d'acides gras saturés en poids de la teneur totale en acides gras est inférieur à 1.

6. Produit alimentaire selon l'une quelconque des revendications précédentes, dans lequel la matière grasse renferme de 2 à 12 %, de préférence de 2,5 à 10 % d'acides gras C₁₂ à C₁₄ en poids de la teneur totale en acides gras.

7. Produit alimentaire selon l'une quelconque des revendications précédentes, dans lequel l'acide palmitique représente au moins 70 % en poids de la teneur totale en acides gras saturés.

8. Produit alimentaire selon l'une quelconque des revendications précédentes, dans lequel les acides gras polyinsaturés représentent 8 à 32 % en poids, de préférence 10 à 25 % en poids de la teneur totale en acides gras.

9. Produit alimentaire selon l'une quelconque des revendications précédentes, dans lequel la matière grasse ne renferme pas plus de 46 % d'acides gras saturés en poids de la teneur totale en acides gras.

10. Produit alimentaire selon l'une quelconque des revendications précédentes, dans lequel la matière grasse renferme des triglycérides dioléyle, monopalmitoyle et des triglycérides tripalmitoyle dans un rapport en poids d'au moins 7.

11. Produit alimentaire selon l'une quelconque des revendications précédentes, dans lequel le rapport (N₁₀-N₃₀) /N₂₀ est compris entre 3,0 et 7,0.

12. Produit alimentaire selon l'une quelconque des revendications précédentes, dans lequel le produit alimentaire est un produit alimentaire congelé, de préférence de la crème glacée.

13. Procédé pour préparer un mélange de matière grasse ayant un profil de matière grasse solide et une composition d'acides gras, tels que définis dans la revendication 1, ledit procédé comprenant le mélange de :
- 0 à 50 % en poids d'une oléine de palme ayant un indice d'iode d'au moins 50 ;
- 1 à 25 % en poids d'un composant de matière grasse laurique comprenant au moins 50 % d'acides gras en C₁₂ à C₁₄ en poids de la teneur totale en acides gras ;
- 20 à 50 % d'un composant d'huile non saturée comprenant au moins 70 % d'acides gras insaturés en poids de la teneur totale en acides gras ; et
- 10 à 65 % en poids d'une fraction intermédiaire de palme ayant un indice d'iode compris entre 35 et 45.

14. Procédé selon la revendication 13, dans lequel le procédé comprend le mélange de 10 à 50 % en poids de l'oléine de palme ayant un indice d'iode d'au moins 50.
